# FASCICULE DE BREVET EUROPEEN

(11) **EP 2 481 702 B1**
(45) Date de publication et mention de la délivrance du brevet: **06.01.2016**
(21) Numéro de dépôt: 12150586.1
(22) Date de dépôt: 10.01.2012
(51) Int. Cl.: B67D 7/16, B67D 7/84

(54) **Dispositif de pompage d'un fluide, notamment d'un fluide visqueux**
Vorrichtung zum Pumpen einer Flüssigkeit, insbesondere einer viskosen Flüssigkeit
Device for pumping a fluid, in particular a viscous fluid

(30) Priorité: 01.02.2011 FR 1150762
(43) Date de publication de la demande: 01.08.2012
(73) Titulaire: MERIM SERVICES, 36800 Saint Gaultier (FR)
(72) Inventeur: Mulleris, Jean-Jacques, 92200 Neuilly sur Seine (FR)
(74) Mandataire: Debay, Yves

(56) Documents cités:
- EP-A1- 0 612 943
- EP-A2- 2 159 553
- WO-A1-98/36245
- DE-A1- 3 344 196
- US-A- 5 140 263

## Description

La présente invention se rapporte à un dispositif de pompage d'un fluide, en particulier d'un fluide visqueux.

L'invention s'applique plus particulièrement, bien que non exclusivement, à des fluides visqueux tels que des huiles alimentaires usagées utilisées notamment dans les friteuses de restaurants et qui ne peuvent pas être acheminées par les conduites du fait de leur viscosité.

Les huiles alimentaires usagées peuvent être déplacées depuis leur conteneur de stockage jusqu'à l'usine de traitement où elles sont recyclées et valorisées, par l'utilisation de dispositifs de pompage.

Par exemple, il existe des camions citernes de pompage qui permettent d'aspirer directement les huiles alimentaires de leur conteneur de stockage jusqu'à la citerne du camion par un tuyau relié à citerne, ces huiles étant ensuite transportées par le camion jusqu'à l'usine de traitement.

Un autre type de dispositif de pompage appelé 'transbordeur' et décrit notamment dans la demande de brevet FR 2 923 820 est également utilisé. Il comporte un récipient mobile sur lequel est monté un système de pompage, ce qui permet d'aspirer les huiles alimentaires du conteneur de stockage dans le récipient mobile, le récipient mobile étant ensuite amené jusqu'à l'usine de traitement. Le document US 5 140 263 divulgue un dispositif de pompage selon la préambule de la revendication 1.

Cependant, aujourd'hui, il n'existe pas sur ces dispositifs de pompage de moyen simple permettant de mesurer le volume des huiles alimentaires usagées qui a été aspiré dans chaque conteneur de stockage, et ce d'autant que les huiles alimentaires sont des fluides relativement visqueux présentant des éléments en partie solides tels que des frites et dont la mesure du débit est relativement délicate.

La présente invention a pour objet de pallier cet inconvénient de l'art antérieur et propose un dispositif de pompage d'un fluide, notamment un fluide visqueux, comprenant une pompe, un moteur de pompe ; un moyen de commande du moteur, un clapet anti-retour, le clapet anti-retour présentant un conduit fixé sur la pompe et un moyen d'obturation du conduit se déplaçant entre une position d'ouverture et une position de fermeture, et des moyens de mesure du volume pompé.

Le dispositif de pompage est remarquable en ce qu'un capteur situé dans le clapet anti-retour détecte la position d'ouverture du moyen d'obturation et est relié aux moyens de mesure du volume pompé, les moyens de mesure comportant : un moyen de mesure de la durée d'ouverture du moyen d'obturation relié au capteur, des moyens de mémorisation de la durée d'ouverture reliés au moyen de mesure et des moyens de calcul du volume pompé reliés aux moyens de mémorisation, ces moyens de calcul déterminant le volume pompé à partir d'une part du débit réel de référence de la pompe mesuré avec le moyen d'obturation en position d'ouverture et mémorisé dans les moyens de mémorisation et d'autre part de la durée d'ouverture du moyen d'obturation.

Ainsi, le dispositif de pompage présente un moyen simple et robuste permettant de mesurer le volume pompé avec précision, les marges d'erreur sur l'estimation du volume étant inférieures à 1%, ce qui permet d'établir des factures en rapport avec le volume pompé avec exactitude.

De préférence, le dispositif comporte des moyens d'affichage du volume pompé reliés aux moyens de mesure.

De préférence, le capteur est un capteur de proximité détectant la position.

Avantageusement, le capteur est un capteur inductif.

Encore avantageusement, un jeu de 0.5 à 1 mm est laissé entre le moyen d'obturation dans la position d'ouverture et le capteur de proximité.

Dans le mode de réalisation préféré, le clapet anti-retour comporte un piquage dans lequel le capteur est fixé. Le piquage comporte une rondelle d'adaptation dans laquelle est fixé le capteur.

De préférence, le clapet anti-retour fonctionne suivant deux positions, une position horizontale et une position verticale de la pompe.

Dans le mode de réalisation préféré, le moyen d'obturation est monté pivotant entre la position d'ouverture et la position de fermeture autour d'un axe transversal au conduit du clapet.

Le clapet anti-retour est fixé sur un raccord femelle de sortie destiné à raccorder la pompe à un tuyau de refoulement du fluide.

L'invention concerne également un système de collecte comprenant un premier moyen de stockage, un deuxième moyen de stockage et le dispositif de pompage défini précédemment et présentant des tuyaux reliant la pompe aux deux moyens de stockage.

Avantageusement, un moyen de déplacement permet de déplacer le dispositif de pompage entre les deux moyens de stockage fixes, le dispositif de pompage étant fixé sur le moyen de déplacement.

Ainsi, l'opérateur peut facilement déplacer l'ensemble constitué par le dispositif de pompage et le moyen de déplacement, cet ensemble ne présentant pas de conteneur de stockage.

De préférence, le moyen de déplacement est un diable et comporte au moins une plaque de support sur laquelle est fixé le dispositif de pompage.

Dans le mode de réalisation préféré, le diable comporte un moyen de support destiné à venir en contact avec le sol, et une pelle présentant une cale permettant de maintenir le diable en position verticale.

L'invention, ses caractéristiques et ses avantages apparaîtront plus clairement à la lecture de la description faite en référence aux figures annexées dans lesquelles :
- la figure 1a est une vue de face d'un dispositif de pompage selon l'invention monté sur un moyen de déplacement,
- les figures 1b, 1c et 1d sont des vues latérales du dispositif de pompage monté sur le moyen de déplacement suivant une position verticale, une position inclinée et une position horizontale du moyen de déplacement,
- la figure 2 est une vue en perspective du système de collecte de fluide comprenant le dispositif de pompage monté sur le moyen de déplacement et relié par deux tuyaux à deux réservoirs de stockage,
- la figure 3 est une vue en perspective et en détails du dispositif de pompage monté sur le moyen de déplacement et équipé de deux raccords destinés à recevoir les deux tuyaux,
- la figure 4 est une vue éclatée en perspective du raccord comprenant conformément à l'invention un clapet anti-retour équipé d'un capteur,
- les figures 5a et 5b sont des vues en coupe longitudinale du clapet anti-retour de la figure 4 selon le plan de coupe du clapet passant par le capteur,
- la figure 6 est un schéma des moyens de mesure du volume pompé, et
- la figure 7 représente un moyen d'affichage du volume de fluide pompé, relié aux moyens de mesure.

L'ensemble des figures décrit un dispositif de pompage (1) de fluide, le fluide pouvant être visqueux et de préférence, mais de façon non limitative, des huiles alimentaires usagées.

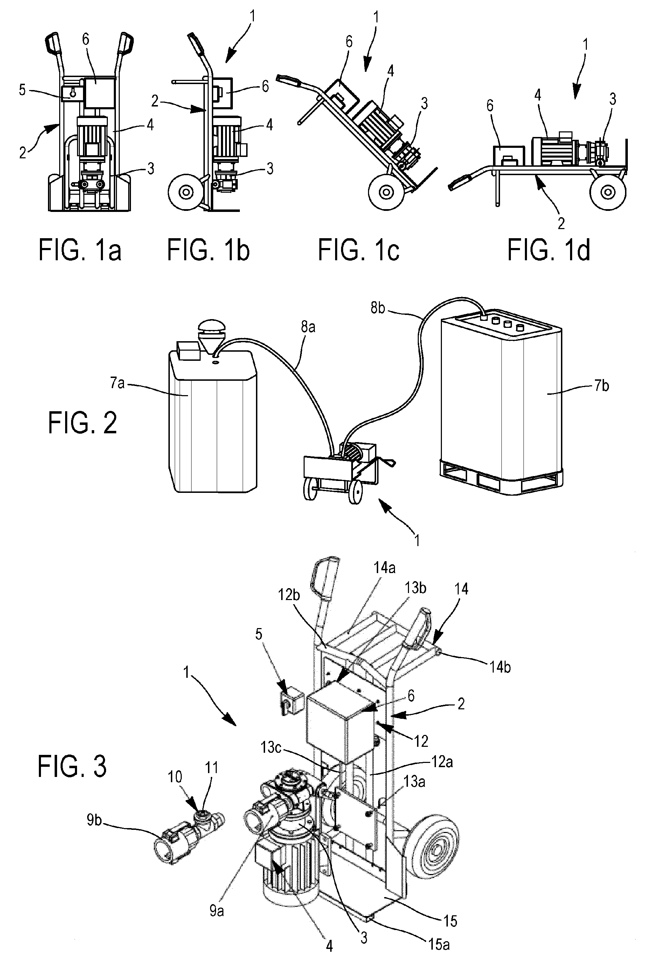

En référence aux figures 1a à 1d, le dispositif de pompage (1) fixé sur un moyen de déplacement (2), présente une pompe (3), un moteur (4), un moyen de commande inverseur (5) du moteur (4) et des moyens de mesure (6) du volume pompé conformément à l'invention et situés dans un boîtier.

Le moyen de déplacement (2) est, en l'espèce ici, représenté par un diable (2) équipé de deux roues et deux poignées. Tout autre moyen de déplacement (2) est envisageable, l'essentiel étant que le dispositif de pompage (1) puisse être déplacé simplement et rapidement par un opérateur.

Le dispositif de pompage (1) est déplacé dans la position inclinée illustrée sur la figure 1c et peut fonctionner dans les positions verticale et /ou horizontale illustrées sur les figures 1b et 1d.

En référence à la figure 2, le dispositif de pompage (1) est intégré dans un système de collecte de fluide qui permet le pompage du fluide entre la pompe (3) et deux réservoirs fixes de stockage du fluide (7a, 7b), un premier réservoir de stockage (7a) à vider et un deuxième réservoir de stockage (7b) à remplir.

Un premier tuyau flexible (8a) d'entrée dit 'd'aspiration' relie le premier réservoir de stockage (7a) à la pompe (3) et un deuxième tuyau flexible (8b) de sortie dit 'de refoulement' relie la pompe (3) au deuxième réservoir (7b) de stockage de fluide.

De façon avantageuse mais non limitative, dans le mode de réalisation préféré illustré sur la figure 2, il n'y a pas de conteneur de stockage supplémentaire sur le diable (2), le dispositif de pompage (1) étant relié directement aux deux réservoirs de stockage (7a, 7b) par les deux flexibles (8a, 8b), ce qui facilite le déplacement de l'ensemble constitué par le moyen de déplacement (2) et le dispositif de pompage (1) entre les deux réservoirs de stockage (7a, 7b).

Sans conteneur de stockage supplémentaire, cet ensemble a un poids minimisé de façon à faciliter son déplacement et une taille minimisée de façon à faciliter son passage dans des endroits exigus.

De plus, l'opération de pompage est optimisée. En effet, l'opérateur a seulement à transporter l'ensemble entre les deux réservoirs fixes de stockage (7a, 7b) et à installer les flexibles (8a, 8b) entre la pompe (3) et les deux réservoirs de stockage (7a, 7b), ce qui évite toute opération de vidange du conteneur de stockage supplémentaire, qui peut s'avérer délicate, en particulier en raison de la température généralement assez élevée des huiles alimentaires.

En référence à la figure 3, le dispositif de pompage (1) comporte deux raccords femelles d'entrée et de sortie (9a, 9b) destinés à raccorder la pompe (3) aux deux tuyaux d'entrée et de sortie (8a, 8b), un clapet anti-retour (10) relié au raccord femelle (9b) de sortie, les moyens de mesure (6) situés dans un boîtier et couplés à un capteur (11) situé dans le clapet anti-retour (10).

Le dispositif de pompage (1) est fixé sur le diable (2).

Pour ce faire, et à titre illustratif uniquement, le diable (2) présente un dossier à cadre rectangulaire (12) métallique ayant deux tubes (12a) à l'intérieur du cadre (12) sur lesquels sont fixés deux plaques de support (13a, 13b). Sur la première plaque de support (13a), sont fixés la pompe (3) et le moteur (4). Sur la deuxième plaque de support (13b), sont fixés le boîtier comprenant les moyens de mesure (6) et le moyen de commande inverseur (5) du moteur.

Une tige (13c) est fixée par ses deux extrémités aux deux plaques de support (13a, 13b).

Le diable (2) est posé à l'horizontal sur le sol par l'intermédiaire des deux roues situés à l'avant du diable (2) et d'un moyen de support (14) situé à l'arrière du diable (2).

Le moyen de support (14) peut présenter toute forme, l'essentiel étant qu'il permette un appui stable du diable (2) sur le sol.

En l'espèce ici, et de façon non limitative, le moyen de support (14) comporte une armature métallique présentant quatre tiges (14a) identiques et parallèles soudées par une extrémité de façon sensiblement perpendiculaire à une tige arrière (12b) du cadre (12), et par une autre extrémité de façon également sensiblement perpendiculaire à une tige transversale (14b), cette tige transversale (14b) étant destinée à reposer en appui sur le sol.

Le diable (2) comporte une pelle (15) ayant une cale (15a). Cette cale (15a) permet de tenir en position légèrement inclinée vers l'arrière le dispositif de pompage (1) et le diable (2), lorsque le diable (2) est en position verticale, assurant ainsi une stabilité de l'ensemble notamment en raison du poids du dispositif de pompage (1) qui aurait tendance à faire basculer le diable (2) vers l'avant.

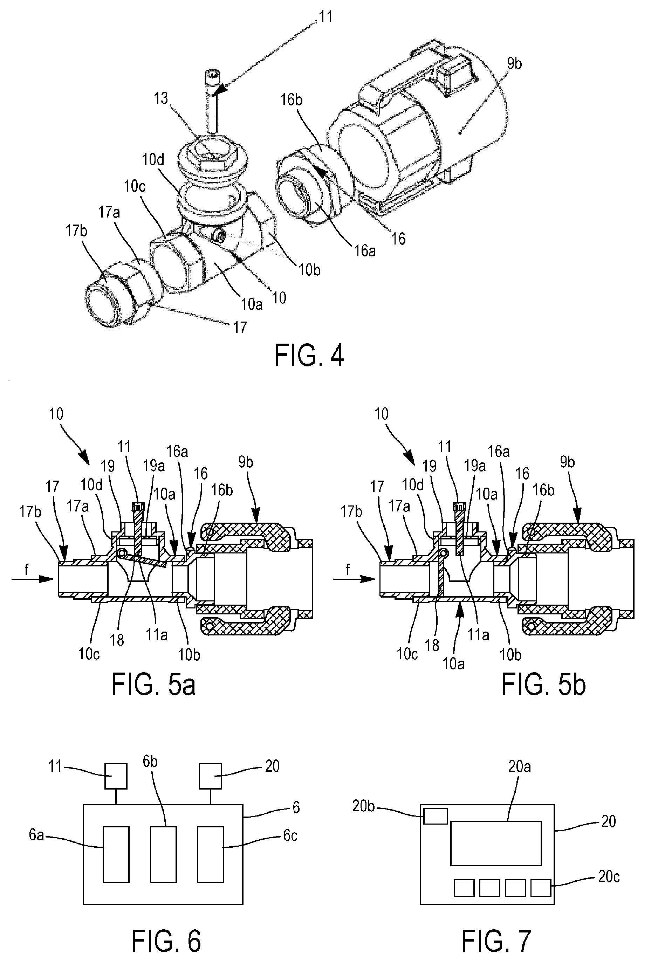

En référence aux figures 4, 5a et 5b, le raccord entre le tuyau de sortie (8b) et la pompe (3) est constitué du raccord femelle (9b), du clapet anti-retour (10), d'un réducteur mâle (16) et d'un raccord mâle (17).

Le conduit (10a) ou corps longitudinal de clapet anti-retour est vissé par une extrémité aval (10b) (par rapport à l'écoulement du fluide représenté par la flèche f) sur une extrémité extérieure (16a) du réducteur (16), le réducteur (16) étant lui-même vissé par son autre extrémité (16b) dans le raccord femelle (9b) de sortie.

Le conduit (10a) est vissé par une extrémité amont (10c) sur une extrémité extérieure (17a) du raccord mâle (17), le raccord mâle (17) étant lui même vissé par son autre extrémité (17b) sur le corps de pompe (3).

Le corps (10a) de clapet anti-retour présente un piquage (10d) dans lequel est disposé le capteur (11), ce qui lui confère une forme en T inversée sur les figures 4, 5a et 5b.

Le piquage est de forme cylindrique et correspond à la branche verticale (10d) de la forme en T inversé, la branche horizontale de la forme en T inversé correspondant au conduit (10a) du clapet (10) dans lequel circule le fluide.

A titre illustratif, le clapet anti-retour (10) est uniquement à simple battant. Le moyen d'obturation (18) est fixé dans la branche verticale (10d) du T inversé, pivotant autour d'un axe transversal à l'axe longitudinal du corps (10a) de clapet.

Toutefois, dans d'autres modes de réalisation non représentés sur les figures, d'autres types de clapet anti-retour sont possibles, ces clapets fonctionnant en position verticale et/ou horizontale.

Le capteur (11) est fixé dans une rondelle d'adaptation (19) elle-même fixée par vissage dans une ouverture circulaire située à l'extrémité du piquage (10d) du clapet (10). La rondelle d'adaptation (19) présente un trou (19a) pour recevoir et bloquer le capteur (11) de sorte que l'extrémité inférieure (11a) du capteur (11) soit située à proximité du moyen d'obturation (18) de façon à le détecter.

Ainsi, le capteur (11) détecte par son extrémité inférieure (11 a) la position d'ouverture du moyen d'obturation (18) illustrée sur la figure 5a et ne détecte pas la position de fermeture du moyen d'obturation (18) illustrée sur la figure 5b. Tout capteur (11) susceptible de détecter la position d'ouverture du moyen d'obturation (18) est envisageable.

En l'espèce ici, il s'agit à titre illustratif uniquement d'un capteur inductif télé- mécanique. Par exemple, un tel capteur peut détecter le clapet, en fonction du modèle utilisé, à des distances de l'ordre du mm. Par exemple, ici, un jeu de 0.5 à 1 mm, est laissé entre l'extrémité inférieure (11 a) du capteur (11) et le moyen d'obturation (18), le moyen d'obturation (18) étant en butée sur l'arête située entre la branche verticale du T et la branche horizontale du T.

En référence à la figure 6, les moyens de mesure (6) du volume pompé fonctionnent à l'aide de moyens d'alimentation connus non représentés et sont reliés au capteur (11).

Conformément à l'invention, les moyens de mesure (6) comportent un moyen de mesure (6a) de la durée d'ouverture du moyen d'obturation (18) relié au capteur (11), des moyens de mémorisation (6b) reliés au moyen de mesure et enregistrant la durée d'ouverture et des moyens de calcul (6c) du volume pompé reliés aux moyens de mémorisation (6b), ces moyens de calcul (6c) déterminant le volume pompé à partir du débit nominal constructeur de la pompe (3) (fonction de la puissance de la pompe) enregistré dans les moyens de mémorisation (6b) et de la durée d'ouverture.

En d'autres termes, l'invention consiste à utiliser le débit nominal connu de la pompe et la durée d'ouverture déterminée du moyen d'obturation (18) du clapet (10) de façon à calculer le volume pompé durant la durée d'ouverture.

Les écarts constatés avec l'utilisation du capteur inductif couplé avec les moyens de mesure (6) entre les valeurs indiquées par le dispositif selon l'invention et le volume pompé réel sont très faibles, par exemple de l'ordre de 0.7% pour des températures de pompage comprises entre 20°C et 40°C, ce qui montre la précision du dispositif.

Dans d'autres modes de réalisation non représentées, d'autres types de capteur sont possibles. Il peut être envisagé des capteurs de contact ou des capteurs de proximité tels que des capteurs capacitifs ou optiques détectant l'ouverture du clapet à une distance de quelques mm.

La figure 7 illustre un moyen d'affichage électronique (20) du volume pompé par le dispositif de pompage (1) relié aux moyens de mesure (6).

Le moyen d'affichage comporte un écran (20a) permettant d'indiquer le volume pompé en litres, la date et le numéro d'intervention, une touche (20b) permet de réaliser des impressions (une impression du volume pompé étant donnée au client) et des touches (20c) permettent d'ajuster le numéro d'intervention et l'heure de réalisation du pompage.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Dispositif de pompage (1) d'un fluide, notamment un fluide visqueux, comprenant une pompe (3), un moteur de pompe (4), un moyen de commande (5) du moteur, un clapet anti-retour (10), le clapet anti-retour (10) présentant un conduit (10a) fixé sur la pompe (3) et un moyen d'obturation (18) du conduit (10a) se déplaçant entre une position d'ouverture et une position de fermeture, et des moyens de mesure (6) du volume pompé, **caractérisé en ce qu'**un capteur (11) situé dans le clapet anti-retour (10) détecte la position d'ouverture du moyen d'obturation (18) et est relié aux moyens de mesure (6) du volume pompé, les moyens de mesure (6) comportant : un moyen de mesure (6a) de la durée d'ouverture du moyen d'obturation (18) relié au capteur (11), des moyens de mémorisation (6b) reliés au moyen de mesure (6a) et enregistrant la durée d'ouverture, et des moyens de calcul du volume pompé (6c) reliés aux moyens de mémorisation (6b), ces moyens de calcul (6c) déterminant le volume pompé à partir d'une part du débit nominal de la pompe (3) enregistré dans les moyens de mémorisation (6b) et d'autre part de la durée d'ouverture du moyen d'obturation (18).

2. Dispositif de pompage (1) selon la revendication 1, **caractérisé en ce que** le dispositif comporte des moyens d'affichage (20) du volume pompé reliés aux moyens de mesure (6).

3. Dispositif de pompage (1) selon la revendication 1 ou 2, **caractérisé en ce que** le capteur (11) est un capteur de proximité détectant la position d'ouverture du moyen d'obturation (18) à distance du moyen d'obturation (18).

4. Dispositif de pompage (1) selon la revendication 3, **caractérisé en ce que** le capteur (11) est un capteur inductif.

5. Dispositif de pompage (1) selon l'une des revendications 1 à 4, **caractérisé en ce que** le clapet anti-retour (10) comporte un piquage (10d) dans lequel le capteur (11) est fixé.

6. Dispositif de pompage (1) selon la revendication 5, **caractérisé en ce que** le piquage (10d) comporte une rondelle d'adaptation (19) dans laquelle est fixé le capteur (11).

7. Dispositif de pompage (1) selon l'une des revendications 1 à 6, **caractérisé en ce que** le clapet anti-retour (10) fonctionne suivant deux positions, une position horizontale et une position verticale de la pompe (3).

8. Dispositif de pompage (1) selon l'une des revendications 1 à 7, **caractérisé en ce que** le moyen d'obturation (18) est monté pivotant entre la position d'ouverture et la position de fermeture autour d'un axe transversal au corps longitudinal (10a) du clapet.

9. Dispositif de pompage (1) selon l'une des revendications 1 à 8, **caractérisé en ce que** le clapet anti-retour (10) est fixé sur un raccord femelle (9b) de sortie destiné à raccorder la pompe (3) à un tuyau (8b) de refoulement du fluide.

10. Dispositif de pompage (1) selon l'une des revendications 3 à 9, **caractérisé en ce qu'**un jeu de 0.5 à 1 mm est laissé entre le moyen d'obturation (18) dans la position d'ouverture et le capteur de proximité (11).

11. Système de collecte de fluide, en particulier des huiles alimentaires usagées, comprenant un premier moyen de stockage (7a), un deuxième moyen de stockage (7b) et le dispositif de pompage (1) défini selon l'une des revendications 1 à 10 et présentant des tuyaux (8a, 8b) reliant la pompe (3) aux deux moyens de stockage (7a,7b).

12. Système de collecte de fluide selon la revendication 11, **caractérisé en ce qu'**un moyen de déplacement (2) permet de déplacer le dispositif de pompage (1) entre les deux moyens de stockage(7a, 7b) fixes, le dispositif de pompage (1) étant fixé sur le moyen de déplacement (2).

13. Système de collecte de fluide selon la revendication 12, **caractérisé en ce que** le moyen de déplacement (2) est un diable (2) et comporte au moins une plaque de support sur laquelle est fixé le dispositif de pompage (1).

14. Système de collecte de fluide selon la revendication 13, **caractérisé en ce que** le diable (2) comporte un moyen de support (14) destiné à venir en contact avec le sol.

15. Système de collecte de fluide selon la revendication 13 ou la revendication 14, **caractérisé en ce que** le diable (2) comporte une pelle présentant une cale (15a) permettant de maintenir le diable (2) en position verticale.

## Patentansprüche

1. Vorrichtung zum Pumpen (1) eines Fluids, insbesondere eines viskosen Fluids, umfassend eine Pumpe (3), einen Pumpenmotor (4), ein Motorsteuermittel (5), ein Rückschlagventil (10), wobei das Rückschlagventil (10) eine an der Pumpe (3) befestigte Leitung (10a) und ein Mittel (18) zum Verschließen der Leitung (10a) aufweist, das sich zwischen einer Öffnungs- und einer Schließposition bewegt, und Mittel (6) zum Messen des gepumpten Volumens, **dadurch gekennzeichnet, dass** ein in dem Rückschlagventil (10) befindlicher Sensor (11) die Öffnungsposition des Verschlussmittels (18) erkennt und mit Mitteln (6) zum Messen des gepumpten Volumens verbunden ist, wobei die Messmittel (6) Folgendes umfassen: ein Mittel (6a) zum Messen der Öffnungsdauer des Verschlussmittels (18), verbunden mit dem Sensor (11), Speichermittel (6b), die mit dem Messmittel (6a) verbunden sind und die Öffnungsdauer erfassen und Mittel (6c) zum Berechnen des gepumpten Volumens, verbunden mit Speichermitteln (6b), wobei diese Rechenmittel (6c) das gepumpte Volumen einerseits auf der Basis der im Speichermittel (6b) aufgezeichneten Nennförderleistung der Pumpe (3) und andererseits auf der Basis der Öffnungsdauer des Verschlussmittels (18) bestimmen.

2. Pumpvorrichtung (1) nach Anspruch 1, **dadurch gekennzeichnet, dass** die Vorrichtung mit den Messmitteln (6) verbundene Mittel (20) zum Anzeigen des gepumpten Volumens umfasst.

3. Pumpvorrichtung (1) nach Anspruch 1 oder 2, **dadurch gekennzeichnet, dass** der Sensor (11) ein Näherungssensor ist, der die Öffnungsposition des Verschlussmittels (18) im Abstand von dem Verschlussmittel (18) erkennt.

4. Pumpvorrichtung (1) nach Anspruch 3, **dadurch gekennzeichnet, dass** der Sensor (11) ein induktiver Sensor ist.

5. Pumpvorrichtung (1) nach einem der Ansprüche 1 bis 4, **dadurch gekennzeichnet, dass** das Rückschlagventil (10) einen Stutzen (10d) umfasst, in dem der Sensor (11) befestigt ist.

6. Pumpvorrichtung (1) nach Anspruch 5, **dadurch gekennzeichnet, dass** der Stutzen (10d) eine Passscheibe (19) umfasst, in der der Sensor (11) befestigt ist.

7. Pumpvorrichtung (1) nach einem der Ansprüche 1 bis 6, **dadurch gekennzeichnet, dass** das Rückschlagventil (10) mit zwei Positionen arbeitet, einer horizontalen Position und einer vertikalen Position der Pumpe (3).

8. Pumpvorrichtung (1) nach einem der Ansprüche 1 bis 7, **dadurch gekennzeichnet, dass** das Verschlussmittel (18) zwischen der Öffnungsposition und der Schließposition um eine Achse transversal zum Längskörper (10a) des Ventils schwenkend montiert ist.

9. Pumpvorrichtung (1) nach einem der Ansprüche 1 bis 8, **dadurch gekennzeichnet, dass** das Rückschlagventil (10) an einem Ausgangsaufnahmeanschluss (9b) zum Anschließen der Pumpe (3) an einen Fluiddruckschlauch (8b) befestigt ist.

10. Pumpvorrichtung (1) nach einem der Ansprüche 3 bis 9, **dadurch gekennzeichnet, dass** ein Spiel von 0,5 bis 1 mm zwischen dem Verschlussmittel (18) in der Öffnungsposition und dem Näherungssensor (11) vorhanden ist.

11. System zum Sammeln von Fluid, insbesondere von gebrauchten Speiseölen, umfassend ein erstes Speichermittel (7a), ein zweites Speichermittel (7b) und die Pumpvorrichtung (1) wie in einem der Ansprüche 1 bis 10 definiert, mit Schläuchen (8a, 8b), die die Pumpe (3) mit den beiden Speichermitteln (7a, 7b) verbinden.

12. Fluidsammelsystem nach Anspruch 11, **dadurch gekennzeichnet, dass** ein Bewegungsmittel (2) es zulässt, die Pumpvorrichtung (1) zwischen den beiden festen Speichermitteln (7a, 7b) zu bewegen, wobei die Pumpvorrichtung (1) an dem Bewegungsmittel (2) befestigt ist.

13. Fluidsammelsystem nach Anspruch 12, **dadurch gekennzeichnet, dass** das Bewegungsmittel (2) ein Karren (2) ist und wenigstens eine Trägerplatte umfasst, auf der die Pumpvorrichtung (1) befestigt ist.

14. Fluidsammelsystem nach Anspruch 13, **dadurch gekennzeichnet, dass** der Karren (2) ein Tragmittel (14) umfasst, das mit dem Boden in Kontakt kommen soll.

15. Fluidsammelsystem nach Anspruch 13 oder Anspruch 14, **dadurch gekennzeichnet, dass** der Karren (2) eine Schaufel umfasst, die eine Unterlage (15a) aufweist, mit der der Karren (2) in einer vertikalen Position gehalten werden kann.

## Claims

1. Device (1) for pumping a fluid, in particular a viscous fluid, comprising a pump (3), a pump motor (4), a motor control means (5), a non-return valve (10), the non-return valve (10) having a conduit (10a) fixed on the pump (3) and a means (18) for sealing the conduit (10a) which moves between an open position and a closed position, and means (6) for measuring the pumped volume, **characterised in that** a sensor (11) situated in the non-return valve (10) detects the open position of the sealing means (18) and is connected to the means (6) for measuring the pumped volume, the measuring means (6) comprising: a means for measuring (6a) the duration of opening of the sealing means (18) connected to the sensor (11), memory means (6b) which are connected to the measuring means (6a) and record the duration of opening, and means for calculating the pumped volume (6c) which are connected to the memory means (6b), these calculation means (6c) determining the pumped volume on the basis of, on the one hand, the nominal flow rate of the pump (3) recorded in the memory means (6b) and, on the other hand, the duration of opening of the sealing means (18).

2. Pumping device (1) according to claim 1, **characterised in that** the device comprises means (20) for displaying the pumped volume which are connected to the measuring means (6).

3. Pumping device (1) according to claim 1 or 2, **characterised in that** the sensor (11) is a proximity sensor which detects the open position of the sealing means (18) at a distance from the sealing means (18).

4. Pumping device (1) according to claim 3, **characterised in that** the sensor (11) is an inductive sensor.

5. Pumping device (1) according to one of claims 1 to 4, **characterised in that** the non-return valve (11) includes a tapping (10d) in which the sensor (11) is fixed.

6. Pumping device (1) according to claim 5, **characterised in that** the tapping (10d) includes an adapter washer (19) in which the sensor (11) is fixed.

7. Pumping device (1) according to one of claims 1 to 6, **characterised in that** the non-return valve (10) functions in two positions, a horizontal position and a vertical position of the pump (3).

8. Pumping device (1) according to one of claims 1 to 7, **characterised in that** the sealing means (18) is fitted so as to pivot between the open position and the closed position about an axis transverse with respect to the longitudinal body (10a) of the valve.

9. Pumping device (1) according to one of claims 1 to 8, **characterised in that** the non-return valve (10) is fixed on a female output connector (9b) intended for connection of the pump (3) to a pipe (8b) for discharge of the fluid.

10. Pumping device (1) according to one of claims 3 to 9, **characterised in that** a clearance of 0.5 to 1 mm is left between the sealing means (18) in the open position and the proximity sensor (11).

11. System for collecting fluid, in particular used cooling oil, comprising a first storage means (7a), a second storage means (7b) and the pumping device (1) defined according to one of claims 1 to 10 and having pipes (8a, 8b) connecting the pump (3) to the two storage means (7a,7b).

12. Fluid collection system according to claim 11, **characterised in that** a moving means (2) makes it possible to move the pumping device (1) between the two fixed storage means (7a, 7b), the pumping device (1) being fixed on the moving means (2).

13. Fluid collection system according to claim 12, **characterised in that** the moving means (2) is a trolley (2) and includes at least one support plate on which the pumping device (1) is fixed.

14. Fluid collection system according to claim 13, **characterised in that** the trolley (2) includes a support means intended to come into contact with the floor.

15. Fluid collection system according to claim 13 or claim 14, **characterised in that** the trolley (2) includes a scoop having a prop (15a) which make it possible to keep the trolley (2) in the vertical position.
